# EUROPEAN PATENT APPLICATION

(11) **EP 3 255 566 A1**
(43) Date of publication of application: **13.12.2017**
(21) Application number: 16746092.2
(22) Date of filing: 28.01.2016
(51) Int. Cl.: G06F 17/30

(54) **TEXT RETRIEVAL METHOD AND APPARATUS**

(30) Priority: 02.02.2015 CN 201510054321
(71) Applicant: Alibaba Group Holding Limited, Grand Cayman (KY)
(72) Inventor: JIANG, Weiyu, Hangzhou Zhejiang 311121 (CN); WEI, Dong, Hangzhou Zhejiang 311121 (CN)
(74) Representative: Boult Wade Tennant
(86) International application number: PCT/CN2016/072461
(87) International publication number: WO 2016/124097

(57) **Abstract**

Embodiments of the disclosure provide a method and an apparatus for keyword-based text retrieval. The method comprises: performing word segmentation on an initial text for retrieval after receiving a retrieval instruction from a user to obtain keywords included in the initial text; displaying each of the keywords of the initial text; and after receiving, from the user, a keyword retrieval instruction for the displayed one or more keywords, performing retrieval based on a keyword selected by the user. The retrieval efficiency and retrieval experience for users is efficiently improved through the technical solutions provided in the disclosed embodiments.

## Description

### CROSS-REFERENCE TO RELATED APPLICATION

This application claims the benefit of priority of Chinese Application No. CN201510054321.4, titled "Method and Apparatus for Text Retrieval," filed on February 2, 2015, and PCT Application No. PCT/CN2016/072461, titled "Text Retrieval Method and Apparatus" filed on January 28, 2016, the disclosure of each hereby incorporated by reference in their entirety.

### BACKGROUND

### Technical Field

The disclosure relates to the field of information retrieval, and in particular to a method and an apparatus for text retrieval.

### Description of the Related Art

With the development of Internet technologies, more and more people obtain information via networks. For example, a user may retrieve information through a search engine of a mobile terminal or a PC terminal. When searching for information, the user often needs to perform multiple searches to obtain desired information. Improving the retrieval efficiency and retrieval experience for users has become an urgent problem that needs to be solved.

### BRIEF SUMMARY

In view of this, the disclosure describes a method and an apparatus for text retrieval.

Specifically, the embodiments of the disclosure are implemented through the following technical solutions.

The embodiments of the disclosure provide a method for text retrieval, comprising: performing word segmentation on an initial text for retrieval after receiving a retrieval instruction from a user and obtaining keywords included in the initial text; displaying each of the keywords of the initial text; and, after receiving a retrieval instruction for one of the displayed keywords from the user, performing retrieval based on a keyword selected by the user.

Further, after displaying each of the keywords of the initial text, the method further comprises: generating a corresponding checkbox for a keyword when receiving a clicking operation on a blank search box from the user; and wherein the retrieval instruction for the displayed keywords further comprises a retrieval instruction inputted after selecting multiple keywords through the checkbox.

Further, after displaying each of the keywords of the initial text, the method further comprises: generating a corresponding delete option for a keyword when receiving a clicking operation on a blank search box from the user; and wherein the retrieval instruction for the displayed keywords further comprises: a retrieval instruction inputted after deleting one or more keywords through the delete option.

Further, the displaying each of the keywords of the initial text comprises displaying a keyword when it is determined that the keyword is a word related to the retrieval result.

Further, the displaying each of the keywords of the initial text comprises: ranking each of the keywords of the initial text according to a preset rule, and displaying the keywords according to a ranking result.

Further, the displaying each of the keywords of the initial text comprises: displaying each of the keywords of the initial text with different display attributes.

Further, the displaying each of the keywords of the initial text comprises highlighting each of the keywords of the initial text with different colors.

Further, the display attributes comprise one or more of fonts, colors, backgrounds, borders, and brightness.

The disclosure additionally provides an apparatus for text retrieval, wherein the apparatus comprises: a segmentation unit, used for performing word segmentation on an initial text for retrieval after receiving a retrieval instruction from a user and obtaining keywords included in the initial text; a display unit, used for displaying each of the keywords of the initial text; and a retrieval unit, used for, after receiving a retrieval instruction for one of the displayed keywords from the user, performing retrieval based on a keyword selected by the user.

Further, the apparatus further comprises: a first generation unit, used for, after displaying each of the keywords of the initial text, generating a corresponding checkbox for a keyword when receiving a clicking operation on a blank search box from the user; and wherein the retrieval instruction for the displayed keywords further comprises: a retrieval instruction inputted after selecting multiple keywords through the checkbox.

Further, the apparatus further comprises: a second generation unit used for, after displaying each of the keywords of the initial text, generating a corresponding delete option for a keyword when receiving a clicking operation on a blank search box from the user; and wherein the retrieval instruction for the displayed keywords further comprises: a retrieval instruction inputted after deleting one or more keywords through the delete option.

Further, the display unit specifically displays the keyword when it is determined that the keyword is a word related to the retrieval result.

Further, the display unit specifically ranks each of the keywords of the initial text according to a preset rule, and displays the keywords according to a ranking result.

Further, the display unit specifically displays each of the keywords of the initial text with different display attributes.

Further, the display unit specifically highlights each of the keywords of the initial text with different colors.

Further, the display attributes comprise one or more of fonts, colors, backgrounds, borders, and brightness.

From the above description, it is clear that the terminal may perform word segmentation on an initial text for retrieval from a user to obtain keywords included in the initial text; display the keywords for user selection; and perform another retrieval based on one or more keywords selected by the user. The user does not need to re-input a keyword during the whole process, thereby efficiently improving the user's retrieval efficiency and retrieval experience.

### BRIEF DESCRIPTION OF THE DRAWINGS

FIG. 1 is a flow diagram illustrating a method for text retrieval according to some embodiment of the disclosure.
FIG. 2 is an interface diagram of a retrieval interface according to some embodiment of the disclosure.
FIG. 3 is an interface diagram of another retrieval interface according to some embodiments of the disclosure.
FIG. 4 is an interface diagram of another retrieval interface according to some embodiments of the disclosure.
FIG. 5 is an interface diagram of another retrieval interface according to some embodiments of the disclosure.
FIG. 6 is a block diagram of a terminal according to some embodiments of the disclosure.
FIG. 7 is a block diagram of an apparatus for text retrieval illustrated according to an some embodiments of the disclosure.

### DETAILED DESCRIPTION

Embodiments will be described in detail below and examples are shown in the accompanying drawings. When the accompanying drawings are referenced in the following description, unless otherwise indicated, like numerals in different accompanying drawings refer to like or similar elements. Implementations described in the following embodiments are not representative of all embodiments consistent with the disclosure. Instead, they are merely examples of apparatuses and methods consistent with some aspects related to the disclosure as recited in the appended claims.

The terminology used in the disclosure is for the purpose of describing particular embodiments only and is not intended to limit the disclosed embodiments. The singular forms "a", "an" and "the" used in the disclosure and the claims are also intended to include plural forms, unless the context clearly indicates otherwise. The term "and/or" as used herein refers to and encompasses any and all possible combinations of one or more of the associated items.

Although various pieces of information may be described using first, second, third and the like, such information should not be limited by these terms. These terms are only used to mutually distinguish one piece of information from another piece of similar information. For example, first information may also be referred to as second information; similarly, second information may also be referred to as first information without departing from the scope of the disclosure. Depending on the context, the word "if" as used herein may be construed to mean "when" or "upon," or "in response to determining".

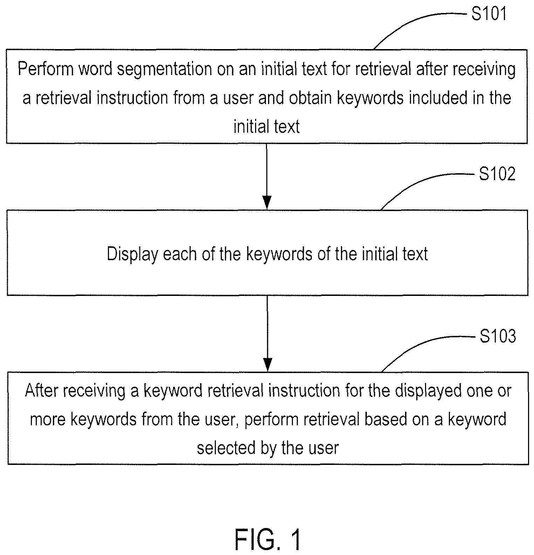

FIG. 1 is a flow diagram illustrating a method for text retrieval according to some embodiment of the disclosure.

The method for text retrieval illustrated in FIG. 1 may be used in a terminal, comprising a mobile terminal or a PC terminal. The method comprises the following steps.

In step 101, the method performs word segmentation on an initial text for retrieval after receiving a retrieval instruction from a user and obtains keywords included in the initial text.

In one embodiment, the user may access various types of search engines through a browser loaded in the terminal. The user may also access the search engines through a search engine-type application or "app" loaded in a portable mobile terminal. The specific mechanism for accessing a search engine is not intended to be restricted. The user may input a to-be-retrieved text in a search box provided by the search engine, and retrieve the results by clicking on a retrieval button. As used herein, an input text during a user's first retrieval is referred to as an initial text.

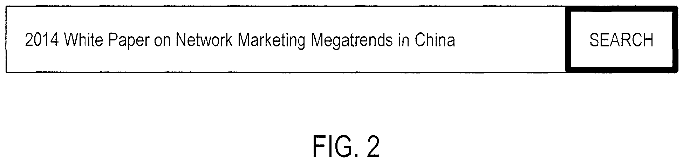

FIG. 2 is an interface diagram of a retrieval interface according to some embodiment of the disclosure. The user may input "2014 White Paper on Network Marketing Megatrends in China" and start a search for the phrase by clicking on the "Search" button. The text "2014 White Paper on Network Marketing Megatrends in China" is the initial text.

In this step, after receiving the retrieval instruction for the initial text from the user, word segmentation is performed on the initial text to obtain keywords included in the initial text. Specifically, word segmentation on the initial text may be performed according to a pre-stored thesaurus. Certainly, open source tools for word segmentation such as ICTCLAS, SCWS and the like provided in the related art may also be adopted, which is not specially restricted by the disclosure.

Still taking the initial text shown in FIG. 2 as an example. In this step, the initial text "2014 White Paper on Network Marketing Megatrends in China" may be segmented into 6 keywords, which are "2014", "White Paper", "Network", "Marketing", "Megatrends", and "China" respectively.

In step 102, the method displays each of the keywords of the initial text.

Based on step 101, after obtaining the keywords included in the initial text through word segmentation, each of the keywords of the initial text is displayed for user selection in this step. Preferably, in this step, each of the keywords may be displayed with different display attributes for ease of identification for users. The display attributes may comprise one or more of fonts, colors, backgrounds, borders, and brightness. For example, each of the keywords of the initial text may be displayed with different fonts, or each of the keywords of the initial text may be displayed with different backgrounds, which are not specially restricted in the disclosure.

In an alternative embodiment, each of the keywords of the initial text may be highlighted with different colors.

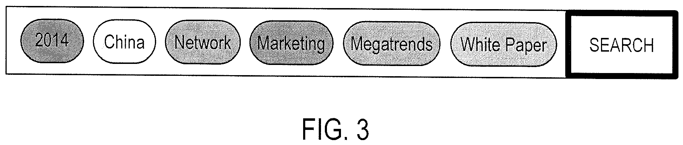

FIG. 3 is an interface diagram of another retrieval interface according to some embodiments of the disclosure. As shown in FIG. 3, the six keywords contained in the initial text "2014 White Paper on Network Marketing Megatrends in China" may be highlighted with different colors.

Further, in an alternative embodiment, after obtaining the keywords included in the initial text, a determination may be first made on whether the keywords are words related to the retrieval results. If it is determined that the keywords are words related to the retrieval results, the keywords are displayed. Those words related to the retrieval results have a great impact on a retrieval result. For example, assuming that the initial text is "routes of going to the Great Wall". On the basis of step 101, the initial text may be divided into 4 keywords, which are "routes", "of", "going to", "the Great Wall" respectively. Notably, the keyword "of" (i.e., a stop word) does not carry substantial content and the existence of it does not influence the retrieval result. The keyword "of" is therefore not a word related to the retrieval result. In this embodiment, the keywords "routes", "going to", and "the Great Wall" may be displayed whereas the keyword "of" may be skipped in step 102 for the initial text "routes of going to the Great Wall".

In one embodiment, because the number of words related to the retrieval result is far larger than the number of words not-related to the retrieval result like "of", developers may predefine a list of stop words not-related to the retrieval result to simplify the process. After obtaining the keywords included in the initial text, a determination is made as to whether the keywords match any of the words in the list of predefined stop words not related to the retrieval result. Keywords determined not matching any words in the list of words not related to the retrieval result will then be displayed. In one embodiment, an additional step of determining a keyword is made. After determining that the keyword is a word related to retrieval result, the keyword is displayed, thereby further improving users' retrieval experience.

Furthermore, in an alternative embodiment, after obtaining the keywords included in the initial text, the keywords may be ranked according to a preset rule, and then the keywords are displayed according to the ranking result. For example, the keywords may be ranked by retrieval popularity from the most popular to least popular. Then, the keywords are displayed according to the ranking result. Of course, a person skilled in the art may also adopt other rules to rank the keywords, which is not specially restricted in the disclosure.

In step 103, after receiving a keyword retrieval instruction for the displayed one or more keywords from the user, the method performs retrieval based on a keyword selected by the user.

Based on step 102, after displaying each of the keywords of the initial text, the user may select one or more keywords of the initial text as needed for further retrieval.

In one embodiment, the retrieval instruction for the keyword comprises: selecting one specific keyword. Specifically, if the user needs to retrieve a specific keyword of the initial text, the user may select the keyword; and the terminal will then perform retrieval based on the keyword selected by the user. For example, for a PC terminal, the user may click the keyword using an external device such as a mouse to execute a search for the keyword. For a mobile terminal, the user may click the keyword using a touch screen to execute a search for the keyword. It goes without saying that the user may also select the keyword by means of voice and the like, which is not specially restricted in the disclosure. Still taking the keywords shown in FIG. 3 as an example. If the user selects the keyword "Marketing", the terminal will perform a search again based on the keyword "Marketing".

In an alternative embodiment, the retrieval instruction for the keyword comprises: a retrieval instruction input after selecting multiple keywords. Specifically, if the user needs to search for two or more keywords of the initial text, the user needs to select the two or more than two keywords.

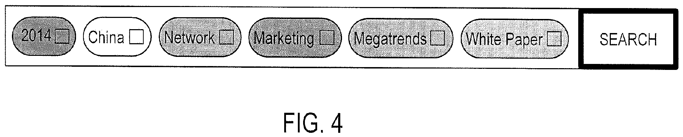

FIG. 4 is an interface diagram of another retrieval interface according to some embodiments of the disclosure.

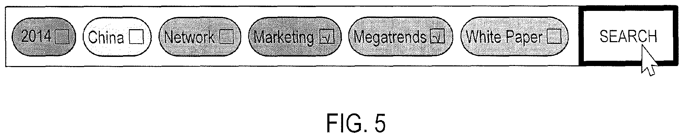

After displaying each of the keywords of the initial text, a corresponding checkbox is generated for the keyword for user selection when receiving a clicking operation on a blank search box from the user. The user may select a keyword that needs to be searched for again by clicking and the like. The user may then click a retrieval button after the selection to complete the step of inputting the retrieval instruction. Assuming that the user needs to retrieve the keywords "Network" and "Marketing" again; then after the user selects the keywords "Network" and "Marketing", a search interface as shown in FIG. 5 may be generated. The user may then click the "Search" button. The terminal will perform retrieval again based on the keywords "Network" and "Marketing".

Optionally, when receiving a clicking operation on a blank search box from the user, a corresponding delete option may also be generated for the keyword. The user may delete a keyword that is not needed through the delete option, so as to keep those keywords that need to be queried again. Returning to FIG. 3 as an example, and assuming that the user needs to search for the keywords "China", "Network", "Marketing" and "White Paper" again, then the user may delete the keywords "2014" and "Megatrends" and then click the "Search" button. Of course, a person skilled in the art may also provide other methods of selecting multiple keywords for the user, which is not restricted in the disclosure.

From the above description, the terminal of the disclosed embodiments may perform word segmentation on an initial text for retrieval from a user to obtain keywords included in the initial text; display the keywords for user selection; and perform another retrieval based on one or more keywords selected by the user. The user does not need to re-input a keyword during the whole process, thereby efficiently improving the user's retrieval efficiency and retrieval experience.

The disclosure further provides an apparatus for text retrieval that corresponds to embodiments of the method for text retrieval. The apparatus may be implemented through software and may also be implemented through hardware or a combination of software and hardware. The apparatus for text retrieval may be an apparatus in a logical sense. That is, by taking a software implementation as an example, the apparatus may be formed by reading corresponding computer program instructions in a non-volatile memory into a memory for running through a processor of a device thereof.

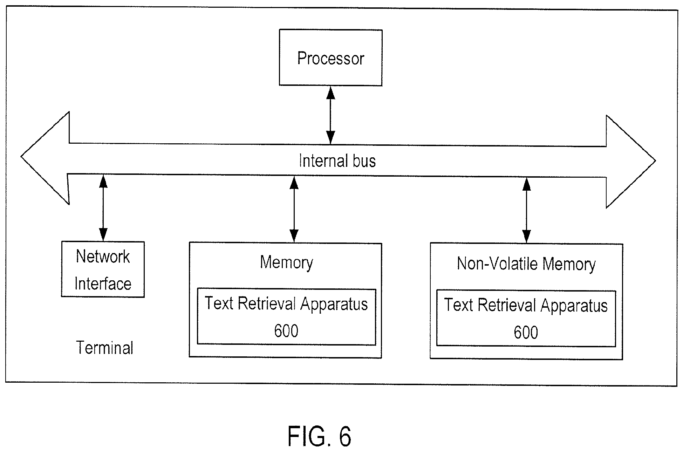

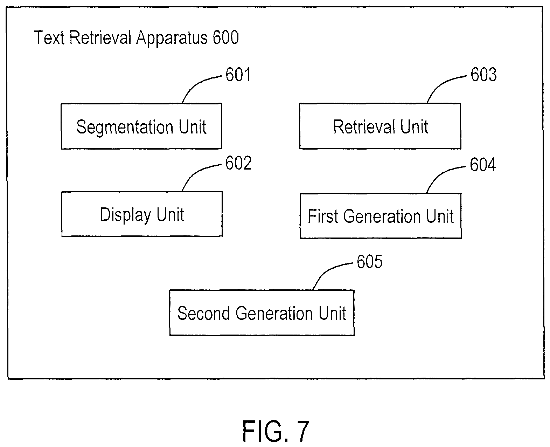

Referring to FIG. 6 and FIG. 7, the disclosure provides an apparatus for text retrieval 600, wherein the apparatus 600 may be applied to a terminal, comprising: a segmentation unit 601, a display unit 602, a retrieval unit 603, a first generation unit 604, and a second generation unit 605.

The segmentation unit 601 performs word segmentation on an initial text for retrieval after receiving a retrieval instruction from a user and obtaining keywords included in the initial text.

The display unit 602 displays each of the keywords of the initial text.

The retrieval unit 603, after receiving a retrieval instruction for the displayed one or more keywords from the user, performs retrieval based on a keyword selected by the user.

The first generation unit, after displaying each of the keywords of the initial text, generates a corresponding checkbox for the keyword when receiving a clicking operation on a blank search box from the user.

In one embodiment, the retrieval instruction for the multiple displayed keywords further comprises an inputted retrieval instruction after selecting multiple keywords through the checkbox.

The second generation unit 605, after displaying each of the keywords of the initial text, generates a corresponding delete option for the keyword when receiving a clicking operation on a blank search box from the user.

In one embodiment, the retrieval instruction for the multiple displayed keywords further comprises: an inputted retrieval instruction after deleting one or more keywords through the delete option.

Further, the display unit 602 specifically displays the keyword when it is determined that the keyword is a word related to the retrieval result.

Further, the display unit 602 specifically ranks each of the keywords of the initial text according to a preset rule, and displays the keywords according to a ranking result.

Further, the display unit 602 specifically displays each of the keywords of the initial text with different display attributes.

Further, the display unit 602 specifically highlights each of the keywords of the initial text with different colors.

Further, the display attributes comprise one or more of fonts, colors, backgrounds, borders, and brightness.

Details of the implementation processes of functions and effects of each of the units of the above apparatus can be seen by referring to the corresponding steps in the implementation processes of the method above, and are thus not repeated herein.

The above description includes only preferred embodiments of the disclosed embodiments, which are not intended to limit the disclosed embodiments. Any alterations, equivalent substitutions, and improvements and the like that are within the spirit and principle of the disclosure shall fall within the scope of the disclosure.

## Claims

1. A method for text retrieval, comprising:
performing word segmentation on an initial text for retrieval after receiving a retrieval instruction from a user and obtaining keywords included in the initial text;
displaying each of the keywords of the initial text; and
after receiving a keyword retrieval instruction for one of the displayed keywords from the user, performing retrieval based on a keyword selected by the user.

2. The method of claim 1, wherein after displaying each of the keywords of the initial text, the method further comprises: generating a corresponding checkbox for a keyword when receiving a clicking operation on a blank search box from the user; and wherein the keyword retrieval instruction for the multiple displayed keywords further comprises: a retrieval instruction inputted after selecting multiple keywords through the checkbox.

3. The method of claim 1, wherein after displaying each of the keywords of the initial text, the method further comprises: generating a corresponding delete option for a keyword when receiving a clicking operation on a blank search box from the user; and wherein the keyword retrieval instruction for the displayed keywords further comprises: a retrieval instruction inputted after deleting one or more keywords through the delete option.

4. The method of claim 1, wherein the displaying each of the keywords of the initial text comprises displaying a keyword when it is determined that the keyword is a word related to the retrieval result.

5. The method of claim 1, wherein the displaying each of the keywords of the initial text comprises:
ranking each of the keywords of the initial text according to a preset rule; and
displaying the keywords according to a ranking result.

6. The method of claim 1, wherein the displaying each of the keywords of the initial text comprises displaying each of the keywords of the initial text with different display attributes.

7. The method of claim 6, wherein the displaying each of the keywords of the initial text comprises highlighting each of the keywords of the initial text with different colors.

8. The method of claim 6, wherein the display attributes comprise one or more of fonts, colors, backgrounds, borders, and brightness.

9. An apparatus for text retrieval, comprising:
a segmentation unit, used for performing word segmentation on an initial text for retrieval after receiving a retrieval instruction from a user and obtaining keywords included in the initial text;
a display unit, used for displaying each of the keywords of the initial text; and
a retrieval unit, used for, after receiving a keyword retrieval instruction for one of the displayed keywords from the user,
performing retrieval based on a keyword selected by the user.

10. The apparatus of claim 9, wherein the apparatus further comprises:
a first generation unit, used for, after displaying each of the keywords of the initial text, generating a corresponding checkbox for a keyword when receiving a clicking operation on a blank search box from the user; and wherein the keyword retrieval instruction for the displayed keywords further comprises: a retrieval instruction inputted after selecting multiple keywords through the checkbox.

11. The apparatus of claim 9, wherein the apparatus further comprises:
a second generation unit used for, after displaying each of the keywords of the initial text, generating a corresponding delete option for a keyword when receiving a clicking operation on a blank search box from the user; and wherein the keyword retrieval instruction for the displayed keywords further comprises: a retrieval instruction inputted after deleting one or more keywords through the delete option.

12. The apparatus according to claim 9, wherein the display unit specifically displays a keyword when it is determined that the keyword is a word related to the retrieval result.

13. The apparatus according to claim 9, wherein the display unit specifically ranks each of the keywords of the initial text according to a preset rule, and displays the keywords according to a ranking result.

14. The apparatus according to claim 9, wherein the display unit specifically displays each of the keywords of the initial text with different display attributes.

15. The apparatus according to claim 14, wherein the display unit specifically highlights each of the keywords of the initial text with different colors.

16. The apparatus according to claim 14, wherein the display attributes comprise one or more of fonts, colors, backgrounds, borders, and brightness.
